# DEMANDE DE BREVET EUROPEEN

(11) **EP 4 714 688 A1**
(43) Date de publication de la demande: **25.03.2026**
(21) Numéro de dépôt: 25203083.8
(22) Date de dépôt: 18.09.2025
(51) Int. Cl.: B60D 1/06, B60R 9/10

(54) **DISPOSITIF CONFIGURÉ POUR VENIR SE FIXER SUR UNE BOULE D'ATTELAGE D'UN VÉHICULE**

(30) Priorité: 20.09.2024 FR 2410025
(71) Demandeur: Skep, 33260 La-Teste-de-Buch (FR)
(72) Inventeur: BENARD, Pascal, 33260 La Teste-de-Buch (FR); LEALI, Théo, 33470 Le Teich (FR)
(74) Mandataire: Germain Maureau

(57) **Abrégé**

Dispositif (1) comprenant une partie de fixation complémentaire (11) configurée pour venir au contact d'une partie de fixation (21) d'une boule d'attelage (2), la partie de fixation complémentaire (11) pouvant être assemblée de manière inamovible sur la partie de fixation (21), et comprenant :
- Une paroi de support (110) munie d'une échancrure (111) configurée pour être insérée autour d'une gorge (22) de la partie de fixation (21) ;
- Un élément de serrage (120) comprenant une tige filetée (121) insérée dans un pas de vis (122) et configuré pour exercer une force de maintien sur un méplat (23) de la partie de fixation (21) ;

Caractérisé en ce que la partie de fixation complémentaire (11) comprend une première plaque de blocage (130) en regard d'une deuxième plaque de blocage (150) reliée l'une à l'autre par au moins deux éléments de blocage (160, 161).

## Description

### Domaine Technique

L'invention concerne le domaine des dispositifs d'accroche sur une boule d'attelage et plus particulièrement un tel dispositif et un porte-bagage comprenant un tel dispositif.

### Etat de la technique antérieure

Une boule d'attelage, également appelée rotule d'attelage ou tête d'attelage, est un dispositif mécanique utilisé pour relier un dispositif à transporter à un véhicule, comme par exemple une voiture. La boule d'attelage est fixée sur une partie arrière du véhicule, et plus précisément sur un châssis arrière du véhicule. Le dispositif à transporter est donc positionné sur une partie extérieure du véhicule.

On définit que les termes « avant » et « arrière » du véhicule font références au véhicule dans une situation de roulage en marche avant. Autrement dit, lorsqu'un conducteur dudit véhicule est normalement assis dans une position de conduite, ledit conducteur est dos à la partie arrière du véhicule, et fait face à l'avant du véhicule.

La partie extérieure du véhicule est opposée à la partie intérieure du véhicule qui correspond à un volume délimité par une carrosserie du véhicule.

On définit que les termes « supérieur » et « inférieur » de la boule d'attelage font références à la boule d'attelage fixée en position d'utilisation sur un véhicule.

Les boules d'attelage sont en métal et présentent une partie de fixation de forme globalement sphérique reliée à un élément de liaison qui est conçu pour être fixé sur le châssis du véhicule. La boule d'attelage comprend des caractéristiques définies par une réglementation, par exemple ISO/R 468 et ISO 1302 sur le territoire Européen. Selon cette réglementation, la partie de fixation présente un diamètre de 50mm. Une gorge est présente entre la partie de fixation et l'élément de liaison, c'est-à-dire sur une zone inférieure de la partie de fixation. En outre, la partie de fixation comprend un méplat qui est positionné sur une partie supérieure de la partie de fixation. Il existe des dispositifs à transporter qui lorsqu'ils sont reliés au véhicule au moyen de la boule d'attelage peuvent présenter un mouvement relatif entre la partie de fixation de la boule d'attelage et une partie de fixation complémentaire du dispositif à transporter, ladite partie de fixation complémentaire venant en contact avec la partie de fixation de la boule d'attelage. C'est le cas, par exemple, des dispositifs à transporter tels qu'une remorque ou une caravane.

Par ailleurs, il existe également des dispositifs à transporter qui lorsqu'ils sont reliés au véhicule au moyen de la boule d'attelage ne présentent pas de mouvement relatif entre la partie de fixation de la boule d'attelage et la partie de fixation complémentaire du dispositif à transporter. C'est le cas, par exemple, des dispositifs à transporter tels que les dispositifs porte-bagages, ou les dispositifs porte-vélo. Ces dispositifs à transporter seront par la suite désignés comme des dispositifs de type fixe.

Il existe des solutions permettant d'assembler de manière démontable un dispositif de type fixe sur une boule d'attelage.

Cependant, il n'existe pas de solution permettant un assemblage rapide, sécurisé et peu onéreux à fabriquer, ainsi qu'une grande rigidité permettant de positionner sur la boule d'attelage une charge utile importante.

### Exposé de l'invention

Un mode de réalisation concerne un dispositif comprenant une partie de fixation complémentaire configurée pour venir au contact d'une partie de fixation d'une boule d'attelage d'un véhicule, la partie de fixation complémentaire étant configurée pour être assemblée de manière inamovible sur la partie de fixation, la partie de fixation complémentaire comprenant :
Une paroi de support munie d'une échancrure, l'échancrure étant configurée pour être insérée autour d'une gorge de la partie de fixation de la boule d'attelage ;
Un élément de serrage s'étendant selon un axe de serrage, l'échancrure de la paroi de support étant alignée avec l'axe de serrage, l'élément de serrage étant configuré pour exercer une force de maintien sur un méplat de la partie de fixation de la boule d'attelage, l'élément de serrage comprenant un moyen de fixation par vissage.

Caractérisé en ce que la partie de fixation complémentaire comprend également une première plaque de blocage en regard d'une deuxième plaque de blocage reliée l'une à l'autre par au moins un élément de blocage, la première plaque de blocage et la deuxième plaque de blocage étant configurées pour venir en contact avec une paroi convexe de la partie de fixation, l'au moins un élément de blocage s'étendant transversalement à l'axe de serrage.

Le dispositif faisant l'objet de l'invention est un dispositif à transporter de type fixe qui peut être fixé sur une boule d'attelage de manière démontable.

Le dispositif comprend une partie de fixation complémentaire configurée pour coopérer avec une partie de fixation d'une boule d'attelage de manière inamovible. Autrement dit, lorsque le dispositif est fixé sur la boule d'attelage, il n'y a aucun mouvement relatif entre la partie de fixation complémentaire et la partie de fixation. La partie de fixation devient solidaire de la partie de fixation complémentaire.

Par la suite, on définit que les termes « supérieur » et « inférieur » du dispositif font références au dispositif fixé en position d'utilisation sur la boule d'attelage d'un véhicule.

La partie de fixation complémentaire comprend une paroi de support. Cette paroi de support est munie d'une échancrure, c'est-à-dire un évidement de forme concave d'un bord de la paroi de support. L'échancrure a sensiblement une forme de U dont un espacement entre deux côtés de l'échancrure a une dimension égale a un diamètre d'une gorge de la boule d'attelage.

L'échancrure est configurée pour être positionnée autour de la gorge de la boule d'attelage. Autrement dit, la gorge de la boule d'attelage est insérée dans l'échancrure avec un mouvement de translation selon un axe d'élongation de l'échancrure. Ainsi, la partie de fixation est bloquée selon les deux axes perpendiculaires à l'axe d'élongation de la paroi de support. La partie de fixation peut être retirée de la paroi de support uniquement avec un mouvement de translation dans l'axe d'élongation de l'échancrure.

L'élément de serrage est formé par un moyen de fixation par vissage, comme par exemple une tige filetée vissée dans un pas de vis. Le moyen de fixation par vissage correspond à l'axe de serrage. L'élément de serrage est positionné en regard de l'échancrure, et plus précisément vis-à-vis d'un centre de l'échancrure. Autrement dit, l'échancrure est alignée avec l'axe de serrage. L'élément de serrage est vissé après l'insertion de l'échancrure autour de la gorge. L'élément de serrage exerce alors une pression sur un méplat de la partie de fixation et le dispositif est fixé sur la partie de fixation. Le méplat est positionné de manière opposée à la gorge de la partie de fixation. Le méplat est positionné sur une partie supérieure de la partie de fixation et la gorge est positionnée sur une partie inférieure de la partie de fixation. La pression exercée par l'élément de serrage empêche un retrait de la partie de fixation de la paroi de support.

En outre, la partie de fixation complémentaire comprend deux plaques de blocage qui sont reliées l'une à l'autre de manière démontable au moyen d'au moins un élément de blocage, par exemple deux éléments de blocage. Les plaques de blocage s'étendent en regard, et plus précisément parallèlement, l'une à l'autre. Les plaques de blocage s'étendent par exemple perpendiculairement à la paroi de support. Lorsque le dispositif est fixé sur la partie de fixation de la boule d'attelage, les plaques de blocage viennent en contact avec la paroi convexe de la partie de fixation. La paroi convexe est sensiblement sphérique et s'étend entre le méplat et la gorge. Les plaques de blocage sont fixées après positionnement de l'échancrure autour de la gorge de la partie de fixation.

Ainsi, la partie de fixation complémentaire est fixée à la partie de fixation de la boule d'attelage de manière inamovible uniquement par des moyens simples à mettre en oeuvre et peu onéreux à fabriquer.

L'objet du présent exposé peut également présenter une ou plusieurs des caractéristiques suivantes prises seules ou en combinaison.

Dans certains modes de réalisation, la première plaque de blocage est solidaire avec la paroi de support, et la deuxième plaque de blocage est assemblée démontable à la partie de fixation complémentaire.

Autrement dit, la première plaque de blocage est inamovible par rapport à la paroi de support. Par exemple la première plaque de blocage est soudée sur la paroi de support.

La deuxième plaque de blocage est mobile par rapport à la première plaque de blocage.

Ainsi, la deuxième plaque de blocage est retirée avant le positionnement de l'échancrure autour de la gorge puis la deuxième plaque de blocage est positionnée en regard de la première plaque de blocage.

La deuxième plaque de blocage peut préférentiellement être retirée complétement de la partie de fixation complémentaire de sorte qu'aucun lien mécanique ne relie la deuxième plaque de blocage à la première plaque de blocage.

Dans certains modes de réalisation, la première plaque de blocage et la deuxième plaque de blocage s'étendent transversalement à l'axe d'élongation de l'échancrure.

Dans certains modes de réalisation, la première plaque de blocage et la deuxième plaque de blocage s'étendent selon l'axe d'élongation de l'échancrure.

Dans certains modes de réalisation, la première plaque de blocage, et/ou la deuxième plaque de blocage, comprend une première portion concave ayant une forme complémentaire à la paroi convexe de la partie de fixation, la première portion concave s'étendant selon l'axe de serrage. La première portion concave correspond à une portion présentant un creux configurée pour coopérer avec la paroi convexe de la partie de fixation. La première portion concave s'étend selon l'axe de serrage. La première portion concave a donc une forme complémentaire de la paroi convexe selon l'axe de serrage de sorte que la paroi convexe peut s'emboiter intimement dans la première portion concave.

Ainsi, lorsque la partie de fixation est positionnée dans la partie de fixation complémentaire, la première portion concave vient épouser la paroi convexe de la partie de fixation.

Dans certains modes de réalisation, la première plaque de blocage, et/ou la deuxième plaque de blocage, comprend une deuxième portion concave ayant une forme complémentaire à la paroi convexe de la partie de fixation, la deuxième portion concave s'étendant transversalement à l'axe de serrage.

La deuxième portion concave correspond à une portion présentant un creux configurée pour coopérer avec la paroi convexe de la partie de fixation. La deuxième portion concave s'étend transversalement à l'axe de serrage. La deuxième portion concave a donc une forme complémentaire de la paroi convexe transversalement à l'axe de serrage de sorte que la paroi convexe peut s'emboiter intimement dans la deuxième portion concave.

Ainsi, lorsque la partie de fixation est positionnée dans la partie de fixation complémentaire, la deuxième portion concave vient épouser la paroi convexe de la partie de fixation.

Dans certains modes de réalisation, l'au moins un élément de blocage comprend une tige filetée coopérant avec un écrou.

Dans certains modes de réalisation, l'élément de serrage comprend au moins un moyen de contrôle.

Le moyen de contrôle est préférentiellement un moyen de contrôle visuel qui permet à un utilisateur de s'assurer que le couple attendu a été exercé sur l'élément de serrage. En outre, le moyen de contrôle peut également éviter un desserrage du moyen de fixation par vissage.

Dans certains modes de réalisation, le moyen de contrôle est un élément qui se déforme lorsque le couple attendu est appliqué sur l'élément de serrage.

Dans certains modes de réalisation, le moyen de contrôle est une rondelle Belleville, également appelée rondelle ressort, ou rondelle élastique, et/ou un ressort, et/ou une rondelle conique.

La rondelle Belleville a une forme conique qui s'aplatie lorsqu'une force prédéterminée est exercée sur celle-ci.

Positionner une rondelle Belleville au niveau de l'élément de serrage permet d'assurer un serrage suffisant par un utilisateur et d'éviter un desserrage de l'élément de serrage. En effet, l'utilisateur doit serrer l'élément de serrage selon le couple prédéfini jusqu'à aplatir la rondelle. La rondelle correspond donc a un moyen visuel permettant de s'assurer que le couple prédéfini a été exercé lors du montage du dispositif.

Dans certains modes de réalisation, le pas de vis de l'élément de serrage est solidaire avec la paroi de support.

Ainsi il n'est pas possible de perdre le pas de vis de l'élément de serrage, et plus largement l'élément de serrage.

Dans certains modes de réalisation, l'élément de serrage est muni d'un dispositif anti-vol.

Le dispositif anti-vol a pour objet d'interdire un desserrement ou dévissage de l'élément de serrage de sorte que la partie de fixation ne puisse pas être retirée de la partie de fixation complémentaire. Le dispositif anti-vol permet donc également d'empêcher un dévissage de l'élément de serrage lié aux vibrations lors d'un mouvement du véhicule.

Un mode de réalisation vise un procédé de fixation d'un dispositif selon l'une quelconque des revendications précédentes sur une boule d'attelage d'un véhicule, comprenant les étapes suivantes :
- Une étape d'insertion dans laquelle l'échancrure de la paroi de support est insérée autour de la gorge de la partie de fixation de la boule d'attelage ;
- Une étape de serrage dans laquelle l'élément de serrage est serré sur le méplat de la partie de fixation de la boule d'attelage de sorte à exercer une force de maintien ;
- Une étape de blocage dans laquelle la première plaque de blocage est reliée à la deuxième plaque de blocage au moyen de l'au moins un élément de blocage.

L'étape de blocage et l'étape de serrage sont réalisées postérieurement à l'étape d'insertion. Il n'existe cependant pas d'ordre de réalisation entre l'étape de serrage et l'étape de blocage.

Dans certains modes de réalisation, l'étape de blocage comprend une phase de positionnement de la deuxième plaque de blocage en regard de la première plaque de blocage, puis une phase de blocage dans laquelle l'au moins un élément de blocage est inséré à travers la première plaque de blocage et la deuxième plaque de blocage.

### Brève description des dessins

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels :
[FIG. 1] est une représentation tridimensionnelle d'un dispositif selon l'invention fixé sur une boule d'attelage d'un véhicule ;
[FIG. 2] est une vue en coupe de la figure 1 ;
[FIG. 3] est une représentation tridimensionnelle d'une partie de fixation complémentaire du dispositif selon l'invention lors d'une première étape de fixation sur la boule d'attelage d'un véhicule ;
[FIG. 4] est une représentation tridimensionnelle de la figure 3 vue suivant un autre angle ;
[FIG. 5] est une représentation tridimensionnelle d'une étape d'insertion selon un procédé selon l'invention ;
[FIG. 6] est une vue en coupe d'une étape de serrage du procédé selon l'invention ;
[FIG. 7] est une représentation tridimensionnelle d'une phase de positionnement selon un procédé selon l'invention ;
[FIG. 8] est une vue en coupe de la figure 7 ;
[FIG. 9] est une représentation tridimensionnelle d'une phase de blocage selon un procédé selon l'invention ;
[FIG. 10] est une représentation tridimensionnelle d'une première phase d'installation d'un anti-vol ;
[FIG. 11] est une représentation tridimensionnelle d'une deuxième phase d'installation d'un anti-vol ;

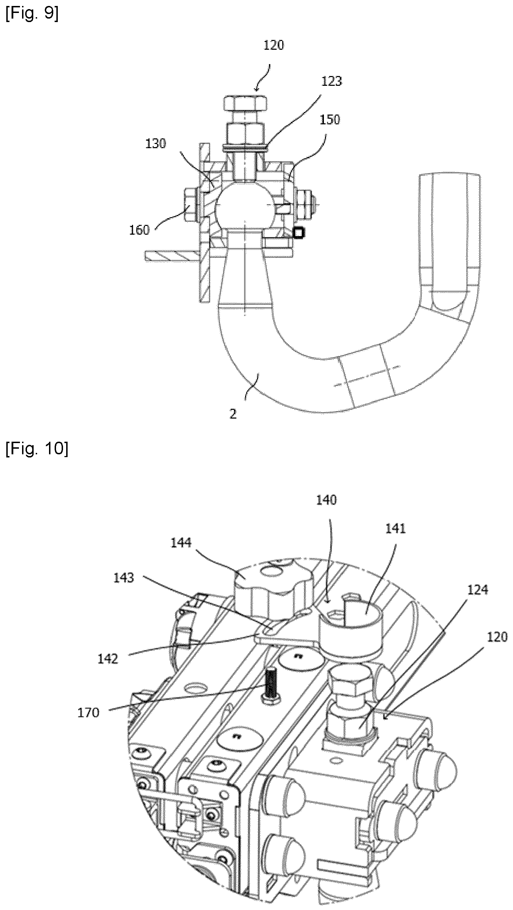

[FIG. 10] est une représentation tridimensionnelle d'une troisième phase d'installation d'un anti-vol ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", « haut », « bas », "avant", "arrière", « longitudinal », « transversal », employés pour décrire le dispositif selon l'invention font référence à ce dispositif en situation d'usage, lorsqu'il est fixé sur une boule d'attelage d'un véhicule.

L'invention porte sur un dispositif 1 destiné à transporter des objets sur une paroi extérieure d'un véhicule 3. Plus précisément, le dispositif 1 peut être fixé sur une boule d'attelage 2 du véhicule 3 de manière démontable.

Le dispositif 1 selon l'invention comprend une partie de fixation complémentaire 11 configurée pour venir au contact d'une partie de fixation 21 de la boule d'attelage 2 du véhicule 3, la partie de fixation complémentaire 11 étant configurée pour être assemblée, ou pour coopérer, de manière inamovible sur la partie de fixation 21. Autrement dit, lorsque le dispositif 1 est fixé sur la boule d'attelage 2, il n'y a aucun mouvement relatif entre la partie de fixation complémentaire 11 et la partie de fixation 21. La partie de fixation 21 devient solidaire de la partie de fixation complémentaire 11.

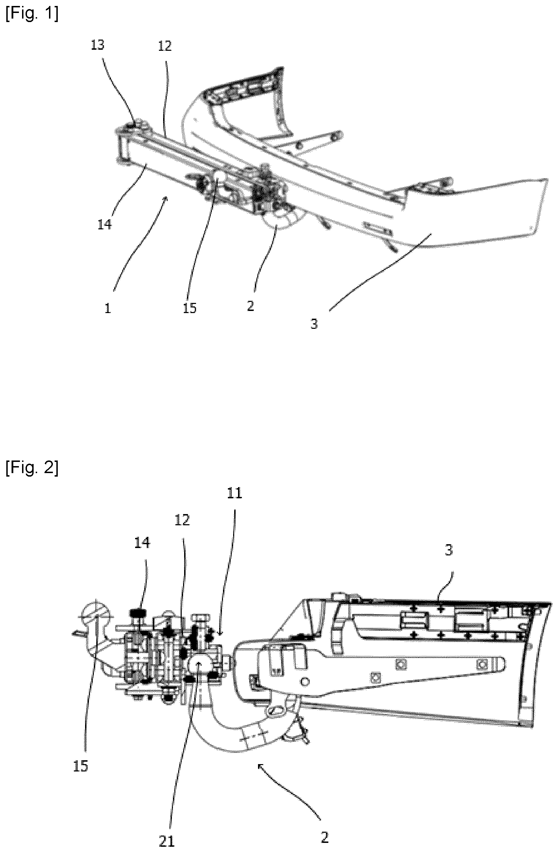

Sur les figures 1 et 2, le dispositif 1 comprend deux bras 12, 14 articulés l'un à l'autre au moyen d'une charnière 13. Une première extrémité du premier bras 12 comprend la partie de fixation complémentaire 11, une deuxième extrémité du premier bras 12 est munie d'une partie de la charnière 13. Une première extrémité du deuxième bras 14 est munie d'une partie complémentaire de la charnière 13 et une deuxième extrémité du deuxième bras 14 comprend une boule d'attelage 15. Ainsi, il est possible de fixer un objet sur cette boule d'attelage 15 de dispositif 1 comme par exemple un porte-vélo.

L'avantage de cette boule d'attelage 15 est de pouvoir être éloignée du véhicule 3 de sorte à permettre un accès au véhicule 3. Pour cela, le deuxième bras 14 est mis en rotation autour de la charnière 13. La boule d'attelage 15, solidaire du deuxième bras, est alors mobile par rapport au véhicule 3. Un utilisateur peut alors accéder au véhicule sans démonter l'objet fixé sur la boule d'attelage 15.

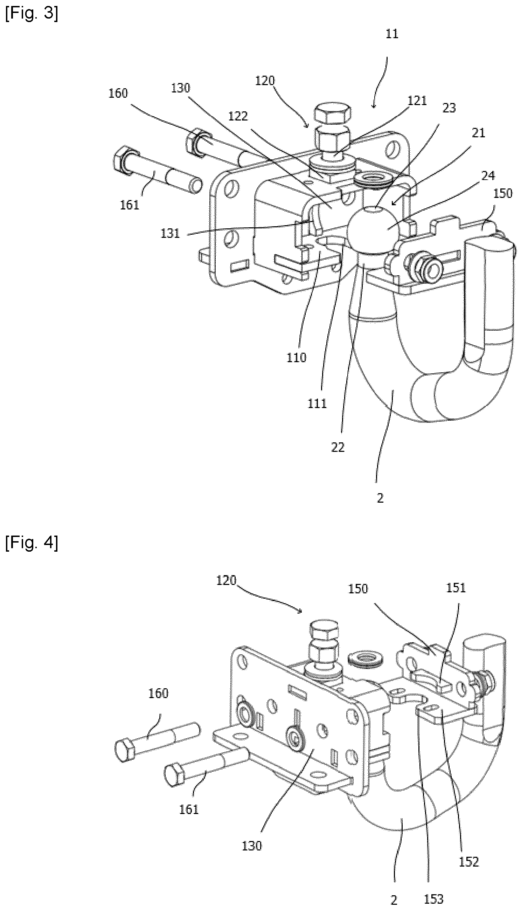

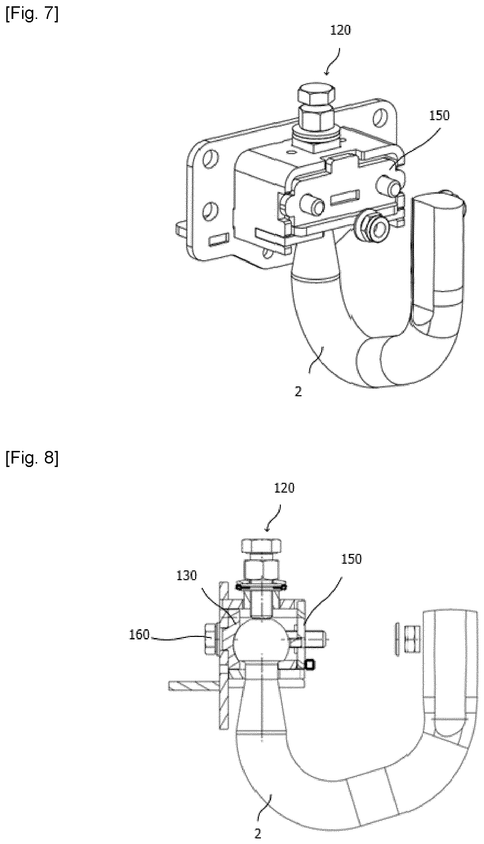

L'invention porte plus précisément sur la partie de fixation complémentaire 11 comme illustrée aux figures 3 à 9.

La partie de fixation complémentaire 11 comprend notamment une paroi de support 110 munie d'une échancrure 111, l'échancrure 111 étant configurée pour être insérée autour d'une gorge 22 de la partie de fixation 21 de la boule d'attelage 2.

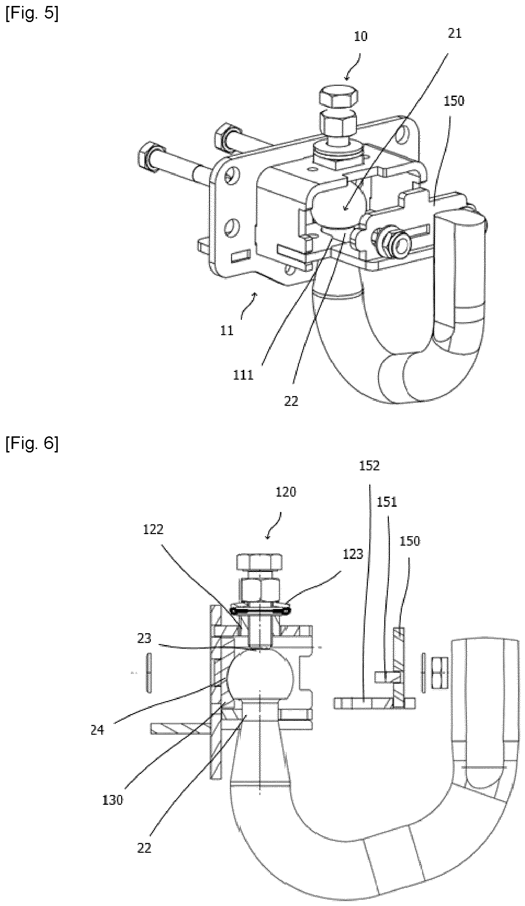

L'échancrure 111 correspond un évidement de forme concave d'un bord de la paroi de support 110. L'échancrure 111 a sensiblement une forme de U dont un espacement entre deux côtés de l'échancrure 111 a une dimension égale a un diamètre de la gorge 22 de la boule d'attelage 2. L'échancrure 111 est configurée pour être positionnée autour de la gorge 22 de la boule d'attelage 2. Autrement dit, la gorge 22 de la boule d'attelage 2 est insérée dans l'échancrure 111 avec un mouvement de translation selon un axe d'élongation de l'échancrure 111, comme illustrée en figure 5. Ainsi, la partie de fixation 21 est bloquée selon les deux axes perpendiculaires à l'axe d'élongation de la paroi de support 110. La partie de fixation 21 peut être retirée de la paroi de support 110 uniquement avec un mouvement de translation dans l'axe d'élongation de l'échancrure 111.

Pour fixer le dispositif 1 sur la boule d'attelage 2, l'utilisateur réalise un procédé selon l'invention qui comprend une première étape de fixation. Durant celle-ci la partie de fixation 21 est positionnée en regard de la partie de fixation complémentaire 11 du dispositif 1, comme illustré en figures 3 et 4. Plus précisément, la gorge 22 de la boule d'attelage 2 est positionnée en vis-à-vis de l'échancrure 111. Puis, la gorge 22 est insérée dans l'échancrure 111, lors d'une étape d'insertion, comme illustré en figure 5.

Par ailleurs, la partie de fixation complémentaire 11 comprend un élément de serrage 120 s'étendant selon un axe de serrage. L'élément de serrage 120 comprend un moyen de fixation par vissage et plus particulièrement sur les figures une tige filetée 121 insérée dans un pas de vis 122. Plus précisément, l'élément de serrage 120 est formé par la tige filetée 121 qui est vissée dans le pas de vis 122. La tige filetée 121 correspond à l'axe de serrage.

L'échancrure 111 de la paroi de support 110 est alignée avec l'axe de serrage. L'élément de serrage 120 est positionné en regard de l'échancrure 111, et plus précisément vis-à-vis d'un centre de l'échancrure 111.

Sur les figures, le pas de vis 122 de l'élément de serrage 120 est solidaire avec la paroi de support 110. Ainsi il n'est pas possible de perdre le pas de vis 122 de l'élément de serrage 120, et plus largement l'élément de serrage 120.

En outre, l'élément de serrage comprend un contre-écrou 124 se positionnant sur le moyen de fixation par vissage et plus particulièrement sur la tige filetée 121 afin d'empêcher un desserrage de ladite tige filetée 121.

Comme illustré sur les figures, l'élément de serrage 120 comprend au moins un moyen de contrôle et plus particulièrement une rondelle Belleville 123 sur les figures. La rondelle Belleville 123 est également appelée rondelle ressort, rondelle conique ou rondelle élastique. La rondelle Belleville 123 a une forme conique qui s'aplatie lorsqu'une force prédéterminée est exercée sur celle-ci. Positionner une rondelle Belleville 123 au niveau de l'élément de serrage 120 permet d'assurer un serrage suffisant par l'utilisateur. En effet, l'utilisateur doit serrer l'élément de serrage 120 selon le couple prédéfini jusqu'à aplatir la rondelle 123. La rondelle 123 correspond donc a un moyen visuel permettant de s'assurer que le couple prédéfini a été exercé lors du montage du dispositif.

Comme illustré en figure 6, le procédé selon l'invention comprend une étape de serrage dans laquelle l'élément de serrage 120, et plus précisément la tige filetée 121, est vissé dans le pas de vis 122 après l'insertion de l'échancrure autour de la gorge, c'est-à-dire après l'étape d'insertion. L'élément de serrage 120 exerce alors une force de maintien sur un méplat 23 de la partie de fixation 21 de la boule d'attelage 2. Le dispositif 1 est fixé sur la partie de fixation 21.

Le méplat 23 est positionné de manière opposée à la gorge 22 de la partie de fixation 21. Le méplat 23 est positionné sur une partie supérieure de la partie de fixation 21 et la gorge 22 est positionnée sur une partie inférieure de la partie de fixation 21. La pression exercée par l'élément de serrage 120 empêche un retrait de la partie de fixation 21 de la paroi de support 110.

Lors de l'étape de serrage, le couple exercé sur l'élément de serrage 120 doit être suffisant pour écraser et aplatir les rondelles Belleville 123 comme illustré en figure 9. Ce serrage au couple peut être réalisé après une étape de blocage.

Dans certains modes de réalisation, l'élément de serrage 120 est muni d'un dispositif anti-vol 140 comme illustré aux figures 10 à 12. Le dispositif anti-vol 140 a pour objet d'interdire un desserrement ou dévissage de l'élément de serrage 120 de sorte que la partie de fixation 21 ne puisse pas être retirée de la partie de fixation complémentaire 11.

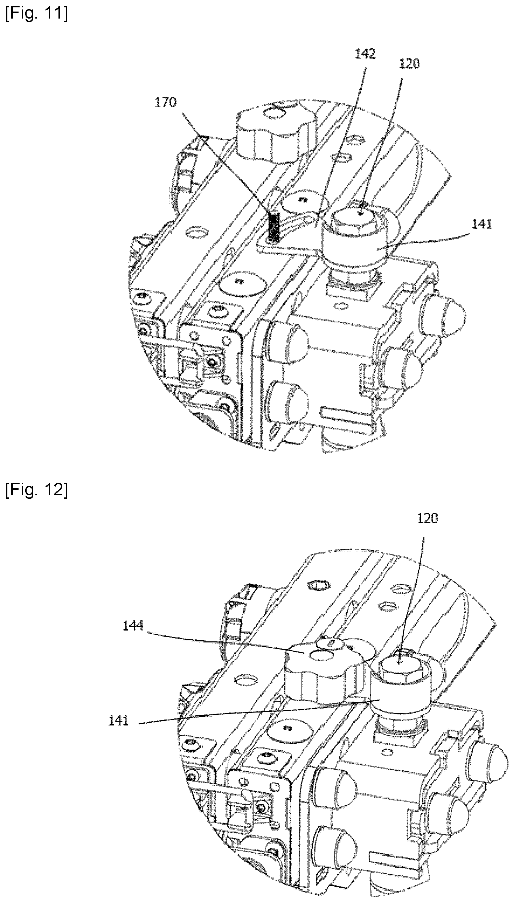

Le dispositif anti-vol 140 comprend une bague 141 venant s'insérer autour du contre-écrou 124 de la tige filetée 121. Cette bague 141 comprend une forme complémentaire du contre-écrou 124 de la tige filetée 121 de sorte qu'un mouvement du contre-écrou 124 entraine une mouvement de la bague 141. La bague 141 est prolongée par une élongation 142 qui est munie d'un orifice 143. La bague 141 est positionée sur le crontre-écrou 124 de la tige filetée 121 de sorte que l'orifice 143 de l'élongation 142 soit positionné autour d'un élément d'arrêt 170 comme illustré en figure 11.

L'élément d'arrêt 170 est un élément fixé solidairement au premier bras 12 du dispositif 1. Par exemple, sur les figures 10 à 12, l'élément d'arrêt est une tige filetée.

Enfin, le dispositif anti-vol 140 comprend un bouton d'arrêt 144 munie d'une serrure à clé. Le bouton d'arrêt 144 est configuré pour être inséré sur l'élément d'arrêt 170. Après actionnement de la clé, le bouton d'arrêt 144 ne peut être retiré de l'élément d'arrêt 170 comme illustré en figure 12.

Ainsi, le dispositif anti-vol est fixé dans une position vis-à-vis di dispositif 1 de sorte qu'il est impossible de dévisser l'élément de serrage 120 pour retirer le dispositif 1 sans retirer le dispositif anti-vol 140.

La partie de fixation complémentaire 11 comprend également une première plaque de blocage 130 en regard d'une deuxième plaque de blocage 150 reliée de manière démontable l'une à l'autre par au moins deux éléments de blocage 160, 161. Les plaques de blocage 130, 150 s'étendent en regard, et plus précisément parallèlement, l'une à l'autre. Les plaques de blocage 130, 150 s'étendent perpendiculairement à la paroi de support 110.

Sur les figures, la première plaque de blocage 130 et la deuxième plaque de blocage 150 s'étendent transversalement à l'axe d'élongation de l'échancrure 111.

La première plaque de blocage 130 est solidaire avec la paroi de support 110, et la deuxième plaque de blocage 150 est assemblée démontable à la partie de fixation complémentaire 11. Autrement dit, la première plaque de blocage 130 est inamovible par rapport à la paroi de support 110. Par exemple la première plaque de blocage 130 est soudée sur la paroi de support 110. La deuxième plaque de blocage 150 est mobile par rapport à la première plaque de blocage 130 lorsque les éléments de blocage 160 ne fixent pas la deuxième plaque de blocage 150. Ainsi, la deuxième plaque de blocage 150 peut préférentiellement être retirée complétement de la partie de fixation complémentaire 11 de sorte qu'aucun lien mécanique ne relie la deuxième plaque de blocage 150 à la première plaque de blocage 130.

Comme visible sur la figure 3, la première plaque de blocage 130 comprend une première portion concave 131 ayant une forme complémentaire à une paroi convexe 24 de la partie de fixation 21. La première portion concave 131 correspond à une portion présentant un creux configurée pour coopérer avec la paroi convexe 24 de la partie de fixation 21. La première portion concave 131 s'étend selon l'axe de serrage. La première portion concave 131 a donc une forme complémentaire de la paroi convexe 24 selon l'axe de serrage de sorte que la paroi convexe 24 peut s'emboiter intimement dans la première portion concave 131. Ainsi, lorsque la partie de fixation 21 est positionnée dans la partie de fixation complémentaire 11, la première portion concave 131 vient épouser la paroi convexe 24 de la partie de fixation 21.

Comme visible sur la figure 4, la deuxième plaque de blocage 150 comprend une deuxième portion concave 151 ayant une forme complémentaire à la paroi convexe 24 de la partie de fixation 21. La deuxième portion concave 151 correspond à une portion présentant un creux configurée pour coopérer avec la paroi convexe 24 de la partie de fixation 21. La deuxième portion concave 151 s'étend transversalement à l'axe de serrage. La deuxième portion concave 151 a donc une forme complémentaire de la paroi convexe 24 transversalement à l'axe de serrage de sorte que la paroi convexe 24 peut s'emboiter intimement dans la deuxième portion concave 151. Ainsi, lorsque la partie de fixation 21 est positionnée dans la partie de fixation complémentaire 11, la deuxième portion concave 151 vient épouser la paroi convexe 24 de la partie de fixation 21.

Dans certains modes de réalisation, la deuxième plaque de blocage 150 comprend une paroi de support complémentaire 152 s'étendant sensiblement dans un plan parallèle au plan dans lequel s'étend la paroi de support 110 lorsque la deuxième plaque de blocage 150 est fixée sur la partie de fixation complémentaire 11. La paroi de support complémentaire 152 comprend une échancrure complémentaire 153.

Les éléments de blocage 160, 161 s'étendant transversalement à l'axe de serrage. Dans certains modes de réalisation, au moins l'un des deux éléments de blocage, et préférentiellement les deux 160, 161, comprend une tige filetée coopérant avec un écrou.

L'étape de blocage comprend une phase de positionnement dans laquelle la deuxième plaque de blocage 150 est positionnée en regard de la première plaque de blocage 130 de sorte à venir en contact avec la paroi convexe 24 de la partie de fixation 21. La paroi convexe 24 est sensiblement sphérique et s'étend entre le méplat 23 et la gorge 22. Dans cette position, l'échancrure complémentaire 153 vient au contact de la gorge 22.

Ensuite, l'étape de blocage comprend une phase de blocage dans laquelle les éléments de blocage 160, 161 sont insérés de part et d'autre de la partie de fixation 21, à travers la première plaque de blocage 130 et la deuxième plaque de blocage 150 de sorte à relier la deuxième plaque de blocage 150 à la première plaque de blocage 130.

Ainsi, la partie de fixation complémentaire 11 est fixée à la partie de fixation 21 de la boule d'attelage 2 de manière inamovible uniquement par des moyens simples à mettre en oeuvre et peu onéreux à fabriquer.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif (1) comprenant une partie de fixation complémentaire (11) configurée pour venir au contact d'une partie de fixation (21) d'une boule d'attelage (2) d'un véhicule (3), la partie de fixation complémentaire (11) étant configurée pour être assemblée de manière inamovible sur la partie de fixation (21), la partie de fixation complémentaire (11) comprenant :
- Une paroi de support (110) munie d'une échancrure (111), l'échancrure (111) étant configurée pour être insérée autour d'une gorge (22) de la partie de fixation (21) de la boule d'attelage (2);
- Un élément de serrage (120) s'étendant selon un axe de serrage, l'échancrure (111) de la paroi de support (110) étant alignée avec l'axe de serrage, l'élément de serrage (120) étant configuré pour exercer une force de maintien sur un méplat (23) de la partie de fixation (21) de la boule d'attelage (2), l'élément de serrage (120) comprenant un moyen de fixation par vissage (121, 122) ;
**Caractérisé en ce que** la partie de fixation complémentaire (11) comprend également une première plaque de blocage (130) en regard d'une deuxième plaque de blocage (150) reliée l'une à l'autre par au moins un élément de blocage (160, 161), la première plaque de blocage (130) et la deuxième plaque de blocage (150) étant configurées pour venir en contact avec une paroi convexe (24) de la partie de fixation (21), l'au moins un élément de blocage (160, 161) s'étendant transversalement à l'axe de serrage, la première plaque de blocage (130), et/ou la deuxième plaque de blocage (150), comprenant une deuxième portion concave (151) ayant une forme complémentaire à la paroi convexe (24) de la partie de fixation (21), la deuxième portion concave (151) s'étendant transversalement à l'axe de serrage.

2. Dispositif (1) selon la revendication 1 dans lequel la première plaque de blocage (130) est solidaire avec la paroi de support (110), et la deuxième plaque de blocage (150) est assemblée démontable à la partie de fixation complémentaire (11).

3. Dispositif (1) selon l'une quelconque des revendications précédentes, dans lequel la première plaque de blocage (130), et/ou la deuxième plaque de blocage (150), comprend une première portion concave (131) ayant une forme complémentaire à la paroi convexe (24) de la partie de fixation (21), la première portion concave (131) s'étendant selon l'axe de serrage.

4. Dispositif (1) selon l'une quelconque des revendications précédentes, dans lequel l'au moins un élément de blocage (160, 161) comprend une tige filetée coopérant avec un écrou.

5. Dispositif (1) selon l'une quelconque des revendications précédentes, dans lequel l'élément de serrage (120) comprend au moins un moyen de contrôle (123).

6. Dispositif (1) selon l'une quelconque des revendications précédentes, dans lequel le pas de vis (122) de l'élément de serrage (120) est solidaire avec la paroi de support (110).

7. Dispositif (1) selon l'une quelconque des revendications précédentes, dans lequel l'élément de serrage (120) est muni d'un dispositif anti-vol (140).

8. Procédé de fixation d'un dispositif (1) selon l'une quelconque des revendications précédentes sur une boule d'attelage (2) d'un véhicule (3), comprenant les étapes suivantes :
- Une étape d'insertion dans laquelle l'échancrure (111) de la paroi de support (110) est insérée autour de la gorge (22) de la partie de fixation (21) de la boule d'attelage (2) ;
- Une étape de serrage dans laquelle l'élément de serrage (120) est serré sur le méplat (23) de la partie de fixation (21) de la boule d'attelage (2) de sorte à exercer une force de maintien ;
- Une étape de blocage dans laquelle la première plaque de blocage (130) est reliée à la deuxième plaque de blocage (150) au moyen de l'au moins un élément de blocage (160, 161).

9. Procédé selon la revendication précédente, dans lequel l'étape de blocage comprend une phase de positionnement de la deuxième plaque de blocage (150) en regard de la première plaque de blocage (130), puis une phase de blocage dans laquelle l'au moins un élément de blocage (160, 161) est inséré à travers la première plaque de blocage (130) et la deuxième plaque de blocage (150).
